# EUROPÄISCHE PATENTSCHRIFT

(11) **EP 1 975 438 B1**
(45) Veröffentlichungstag und Bekanntmachung des Hinweises auf die Patenterteilung: **06.10.2010**
(21) Anmeldenummer: 08001809.6
(22) Anmeldetag: 31.01.2008
(51) Int. Cl.: F16D 33/12, F16D 33/14

(54) **Hydrodynamische Kupplung**
Hydrodynamic coupling
Embrayage hydrodynamique

(30) Priorität: 31.01.2007 DE 102007005643
(43) Veröffentlichungstag der Anmeldung: 01.10.2008
(73) Patentinhaber: Voith Patent GmbH, 89522 Heidenheim (DE)
(72) Erfinder: Becke, Martin, 89075 Ulm (DE); Hinrichs, Oliver, 38442 Wolfburg (DE); Klement, Werner Prof., 89520 Heldenheim (DE); Koch, Werner, 73326 Deggingen (DE)
(74) Vertreter: Schmidt, Sven Hendrik

(56) Entgegenhaltungen:
- GB-A- 493 703
- US-A- 2 265 107
- US-A- 3 116 608

## Beschreibung

Die Erfindung betrifft eine hydrodynamische Kupplung.

Hydrodynamische Kupplungen sind bekannt. Sie weisen ein Pumpenrad und ein Turbinenrad auf, welches in der Regel die beiden einzigen Schaufelräder der hydrodynamischen Kupplung sind. Demnach ist kein Leitrad vorgesehen. Häufig werden hydrodynamische Kupplungen in Anfahreinheiten, wie zum Beispiel in der WO 2005/050047 A1 beschrieben, eingesetzt, wobei die hydrodynamische Kupplung parallel zu einer mechanischen Kupplung im Antriebsstrang beziehungsweise dem Getriebe eines Kraftfahrzeugs angeordnet ist.

Das Pumpenrad und das Turbinenrad bilden miteinander einen, in der Regel torusförmigen, Arbeitsraum aus, der mit einem Arbeitsmedium, beispielsweise Öl, Wasser oder einem Wassergemisch, befüllt oder befüllbar ist. Im Pumpenrad wird das Arbeitsmedium radial nach außen beschleunigt, tritt in das Turbinenrad ein, wird dort radial nach innen verzögert und tritt wieder in das Pumpenrad ein. Mittels dieses Arbeitsmediumkreislaufs (Kreislaufströmung) wird Drehmoment beziehungsweise Antriebsleistung vom Pumpenrad auf das Turbinenrad verschleißfrei übertragen.

Es ist bekannt, in hydrodynamischen Kupplungen feststehende oder verschiebbare Drosselscheiben anzuordnen, um den Arbeitsmediumkreislauf und damit das Übertragungsverhalten der hydrodynamischen Kupplung zu beeinflussen, insbesondere gezielt einzustellen. Beispielsweise beschreibt die Offenlegungsschrift DE 103 53 518 A1 zwei alternative Möglichkeiten, Drosselscheiben vorzusehen. Gemäß der ersten Ausführung sind feststehende, in Axialrichtung der hydrodynamischen Kupplung oder in Radialrichtung der hydrodynamischen Kupplung ausgerichtete Drosselscheiben vorgesehen, welche je nach Schlupf zwischen Pumpenrad und Turbinenrad eine mehr oder minder drosselnde Wirkung auf den Arbeitsmediumkreislauf ausüben. Gemäß der zweiten Ausführungsform sind in Axialrichtung der hydrodynamischen Kupplung verschiebbare Wandbereiche des Pumpenrads vorgesehen, um den Arbeitsmediumkreislauf zu beeinflussen.

Die Offenlegungsschrift WO 20051050047 A1 beschreibt in Radialrichtung der hydrodynamischen Kupplung verlaufende Drosselscheiben, die in Axialrichtung der hydrodynamischen Kupplung alleine oder zusammen mit einem Teil des Pumpenrads oder Turbinenrads der hydrodynamischen Kupplung verschiebbar sind, um wahlweise in die Kreislaufströmung von Arbeitsmedium im Arbeitsraum eingebracht zu werden und so das Obertragungsverhalten der hydrodynamischen Kupplung zu beeinflussen.

Bei den gemäß dem Stand der Technik ausgebildeten Ausführungsformen der in hydrodynamischen Kupplungen verwendeten Drosselscheiben ist der Übergang von der sogenannten harten Kennlinie zu der sogenannten weichen Kennlinie, der durch das Einbringen der Drosselscheibe in den Arbeitsraum erreicht wird, abrupt. Unter der weichen Kennlinie versteht man dabei den Verlauf des vom Pumpenrad auf das Turbinenrad übertragbaren Drehmomentes in Abhängigkeit des Drehzahlverhältnisses der Drehzahl des Turbinenrads zur Drehzahl des Pumpenrads bei in den Arbeitsraum eingebrachter Drosselscheibe. Unter harter Kennlinie versteht man den entsprechenden Verlauf dieses Drehmoments über dem Drehzahlverhältnis in einem Betriebszustand, in welchem die Drosselscheibe keine strömungsumlenkende beziehungsweise "drosselnde" Wirkung auf den Arbeitsmediumkreislauf im Arbeitsraum ausübt und insbesondere vollständig aus dem Arbeitsraum entfernt angeordnet ist. Die weiche Kennlinie liegt naturgemäß deutlich unterhalb der harten Kennlinie. In der Regel ist der Arbeitsraum bei beiden Kennlinien vollgefüllt, das heißt, es ist kein Teilfüllungszustand mit einer verminderten Arbeitsmediummenge, wie man sie bei füllungsgesteuerten hydrodynamischen Kupplungen kennt, eingestellt.

Der beschriebene abrupte Übergang von der harten Kennlinie auf die weiche Kennlinie und auch von der weichen Kennlinie auf die harte Kennlinie ist Im Hinblick auf Drehmomentstöße in einem Antriebsstrang , in welchem die hydrodynamische Kupplung angeordnet ist und im Hinblick auf die Bauteilbelastung nachteilig.

Zum weiteren Stand der Technik, welcher hydrodynamische Kupplungen mit entweder feststehenden Scheiben, die Drosselöffnungen aufweisen, damit ein Teil des Arbeitsmediums durch die Scheiben strömen kann, oder welche verschiebbare vollflächige Drosselscheiben ohne Öffnungen zeigen, wird auf die folgenden Dokumente verwiesen:
DE 1 059 253 B
CH 411501
GB 1 011 943
DE 43 11 350 C2
US 3 173 260
DE 10 2005 043 756 A1

Zum weiteren Stand der Technik sind US 2265107, GB 493703 und US 3116608 zur betrachten.

Der Erfindung liegt die Aufgabe zugrunde, eine hydrodynamische Kupplung bereitzustellen, welche die Nachteile des Standes der Technik vermeidet, wobei insbesondere ein abruptes Zusammenbrechen der Kennlinie der Drehmomentübertragung beziehungsweise ein abrupter Übergang von der harten Kennlinie auf die weiche Kennlinie beim Einbringen der Drosselscheibe in den Arbeitsraum oder die Kreislaufströmung vermieden wird.

Diese Aufgabe wird durch die hydrodynamische Kupplung nach dem unabhängigen Anspruch gelöst. Die abhängigen Ansprüche stellen bevorzugte Ausführungsformen der Erfindung dar.

Eine erfindungsgemäße hydrodynamische Kupplung weist ein Pumpenrad und ein Turbinenrad auf, die miteinander einen torusförmigen, mit einem Arbeitsmedium befüllten oder befüllbaren Arbeitsraum ausbilden, in dem eine Kreislaufströmung des Arbeitsmediums ausbildbar ist. Es ist eine Drosselscheibe vorgesehen, die mittels eines Verstellmechanismus in Axialrichtung der hydrodynamischen Kupplung verschiebbar ist, um in den Arbeitsraum eingebracht und/oder innerhalb dessen verschoben zu werden, Die Drosselscheibe kann dabei aus einer im Wesentlichen kreis- oder kreisringförmigen Platte ausgebildet sein. Die Drehachse des Pumpenrades und des Turbinenrades (Rotationsachse), also auch die in Axialrichtung der hydrodynamischen Kupplung, stehen dann im Mittelpunkt der Drosselscheibe im Wesentlichen senkrecht auf der Oberfläche der Drosselscheibe.

Es sind auch andere geometrische Formen der Drosselscheibe denkbar, Eine dieser anderen Formen sieht beispielsweise eine ringförmige beziehungsweise hohlzylinderförmige Drosselscheibe vor, die in Richtung ihrer Mittelachse in den und aus dem Arbeitsraum beziehungsweise innerhalb dessen verschoben werden kann.

Erfindungsgemäß weist die Drosselscheibe in einem Randbereich ihres als Anströmbereich der Kreislaufströmung vorgesehen Oberflächenbereichs mindestens eine Überlauföffnung für einen Teil der Kreislaufströmung auf. Der Anströmbereich ist dabei als der Bereich der Drosselscheibe festgelegt, auf den die Kreislaufströmung des Arbeitsmediums beim Einbringen der Drosselscheibe in den Arbeitsraum beziehungsweise in die Kreislaufströmung anströmt. Der Randbereich des Anströmbereichs ist der Bereich des Anströmbereichs auf den die Kreislaufströmung des Arbeitsmediums beim Einbringen der Drosselscheibe in den Arbeitsraum beziehungsweise die Kreislaufströmung zuerst auftrifft.

Die Überlauföffnungen sind während des Einbringens der Drosselscheibe in den Arbeitsraum beziehungsweise die Kreislaufströmung bevorzugt vollständig offen, so dass ein Teil der Kreislaufströmung in einem Zeitbereich während des Einbringens durch die Überlauföffnungen hindurch strömen kann. Das heißt der Teil der Kreislaufströmung kann, während sich die Drosselscheibe in Zwischenpositionen zwischen einer aktiven Position maximaler Drosselung und einer inaktiven Position außerhalb des Arbeitsraums beziehungsweise außerhalb der Kreislaufströmung befindet, durch die offenen Überlauföffnungen hindurch strömen. Der verbleibende Teil der Kreislaufströmung trifft hingegen außerhalb der Überlauföffnung oder Überlauföffnungen auf die Oberfläche der Drosselscheibe auf und wird durch diese umgelenkt. Es wird somit nur ein Teil der Strömung, die an die Drosselscheibe (beziehungsweise deren Überlauföffnungen) anströmt im herkömmlichen Sinne gedrosselt, wohingegen bei bekannten Drosselscheiben ohne Überlauföffnungen die gesamte Strömung, die im entsprechenden Bereich an die Drosselscheibe anströmt, durch die Drosselscheibe gedrosselt wird. Erst wenn sich die Drosselscheibe der erfindungsgemäßen hydrodynamischen Kupplung im Wesentlichen oder vollständig in ihrer aktiven Position maximaler Drosselung befindet, hat die mindestens eine vorgesehen Überlauföffnung gemäß einer vorteilhaften Ausführungsform der Erfindung keinen Einfluss mehr auf die Kreislaufströmung von Arbeitsmedium im Arbeitsraum und ist vorteilhaft außerhalb dieser Kreislaufströmung, beispielsweise radial innerhalb der Kreislaufströmung im Arbeitsraum, angeordnet.

Im Falle einer kreis- oder kreisringförmigen Platte als Drosselscheibe, die als Innendrosselscheibe ausgebildet ist, ist der Anströmbereich als die Richtung Turbinenrad ausgerichtete (Anströmseite) Oberfläche des den Außenbereich der Drosselscheibe ausbildenden Kreisrings festgelegt, auf den die Kreislaufströmung des Arbeitsmediums während des Einbringens in den Arbeitsraum auftrifft. Eine Innendrosselscheibe wird in einem radial innen liegenden Bereich in die torusförmige Kreislaufströmung eingebracht. Die kreis- oder kreisringförmige Drosselscheibe kann jedoch auch als Außendrosselscheibe ausgebildet sein. Diese wird in einem radial außen liegenden Bereich in die torusförmige Kreislaufströmung eingebracht. Dann ist der Anströmbereich als die Richtung Pumpenrad ausgerichtete Oberfläche des den Innenbereich der Drosselscheibe ausbildenden Kreisrings festgelegt, auf den die Kreislaufströmung des Arbeitsmediums während des Einbringens in den Arbeitsraum auftrifft.

Die Überlauföffnungen sind dabei derart dimensioniert, dass in den Kreisringsegmenten des Anströmbereichs, die eine der Überlauföffnungen aufweisen, die Kreislaufströmung des Arbeitsmediums während des Einbringens der Drosselscheibe in den Arbeitsraum später unterbrochen wird als in den Kreisringsegmenten des Anströmbereichs, die keine der Überlauföffnungen aufweisen. Die radiale Ausdehnung der Überlauföffnungen zum Mittelpunkt der Drosselscheibe kann zum Beispiel die halbe oder ein Drittel der Breite des Anströmbereiches ausmachen. Die Überlauföffnungen können also radial zumindest in axialen Teilbereichen lediglich teilweise in den Anströmbereich hineinragen. Durch Variieren der Gestaltung der Überlauföffnungen kann der Übergang des Drehmomentverlaufs von der weichen Kennlinie auf die harte Kennlinie und umgekehrt angepasst werden und insbesondere ein gleichmäßiger Übergang frei von Sprungstellen erzielt werden. Durch die Fläche der Überlauföffnungen kann die Steigung des Übergangs eingestellt werden.

Es ist auch möglich, die Überlauföffnungen so zu gestalten, dass ihre Breite in Umfangsrichtung der Drosselscheibe von radial außen nach innen zu- oder abnimmt, Die Breite derartiger Überlauföffnungen bildet dann in einem Bereich der Drosselscheibe nur noch einen Spalt aus, der so schmal ist, dass die Kreislaufströmung des Arbeitsmediums auch bei Vorhandensein des Spaltes unterbrochen wird. Im Falle einer Innendrosselscheibe nimmt die Breite dabei von radial außen nach innen ab. Das heißt der Spalt ist radial innenliegend positioniert. Im Falle einer Außendrosselscheibe dagegen nimmt die Breite dabei nach radial außen ab.

Bei der erfindungsgemäßen hydrodynamischen Kupplung wird beim Einbringen der Drosselscheibe in den Arbeitsraum die Kreislaufströmung des Arbeitsmediums schrittweise jeweils in Segmenten unterbrochen (beziehungsweise umgelenkt oder "gedrosselt"). Zunächst wird die Kreislaufströmung dort unterbrochen, wo keine Überlauföffnungen in der Drosselscheibe vorhanden sind, da die Oberfläche der Drosselscheibe dort bereits bei noch nicht vollständigem Einbringen der Drosselscheibe in den Arbeitsraum die Kreislaufströmung unterbricht. Das heißt das Arbeitsmedium strömt dort bereits bei teilweisem Einbringen der Drosselscheibe in den Arbeitsraum auf den Anströmbereich, wird dort abgebremst und schwappt über den äußeren Rand der Drosselscheibe. In den Bereichen der Drosselscheibe, die Überlauföffnungen aufweisen, kann das Arbeitsmedium dagegen, bei noch nicht ausreichendem Einbringen der Drosselscheibe in den Arbeitsraum, noch durch die Überlauföffnungen hindurch strömen. Die Kreislaufströmung wird dort also erst später, nämlich nach vollständigem beispielsweise ausreichendem Einbringen der Drosselscheibe in den Arbeitsraum, unterbrochen. Das heißt das Arbeitsmedium strömt dort erst später auf die Oberfläche der Drosselscheibe, wird dort erst später abgebremst und schwappt später über den äußeren Rand der Drosselscheibe, beispielsweise der entsprechenden Überlauföffnung.

Somit kann ein abruptes Unterbrechen beziehungsweise Umlenken der vollständigen Kreislaufströmung vermieden werden. Die Unterbrechung beziehungsweise Verminderung der Drehmomentübertragung durch die erfindungsgemäße hydrodynamische Kupplung erfolgt also schrittweise oder stufenlos.

Ein weiterer Vorteil ergibt sich daraus, dass das Einbringen der Drosselscheibe in die Kreislaufströmung gegenüber bekannten hydrodynamischen Kupplungen erleichtert wird. Letzteres folgt daraus, dass die zum Einbringen der Drosselscheibe in die Kreislaufströmung notwendige Kraft proportional zur dabei pro Zeiteinheit unterbrochenen Arbeitsmediumsströmung ist. Da die Arbeitsmediumsströmung erfindungsgemäß schrittweise unterbrochen wird, ist die zum Einbringen der Drosselscheibe in die Kreislaufströmung notwendige Kraft geringer als bei bekannten hydrodynamischen Kupplungen.

Vorteilhaft sind die Überlauföffnungen als radial in die Drosselscheibe eingreifende Einbuchtungen eines Randes der Drosselscheibe und/oder als Bohrungen im Randbereich der Drosselscheibe ausgebildet.

Im Falle einer als kreis- oder kreisringförmige Innendrosselscheibe ausgebildeten Drosselscheibe sind die Überlauföffnungen dabei als radial in Richtung des Mittelpunktes der Drosselscheibe verlaufende Einbuchtungen des radial äußeren Randes der Drosselscheibe und/oder als Bohrungen im äußeren Randbereich der Drosselscheibe ausgebildet. Derart können die Überlauföffnungen durch Fräsen oder Bohren einfach in die Drosselscheibe eingearbeitet werden. Im Falle der Ausprägung als Bohrungen können die Überlauföffnungen so positioniert sein, dass der radial äußere Rand der Drosselscheibe nicht von den Bohrungen geöffnet ist, das heißt der radial äußere Rand der Drosselscheibe kann zum Beispiel einen Kreis um den Mittelpunkt der Drosselscheibe, beispielsweise um die Drehachse des Pumpenrades und des Turbinenrades, ausbilden.

Wenn die Überlauföffnungen zumindest in radialer Richtung der Drosselscheibe zumindest teilweise unterschiedliche Durchmesser aufweisen, kann das Unterbrechen der Kreislaufströmung beim Einbringen der Drosselscheibe in den Arbeitsraum zusätzlich zeitlich aufgeteilt werden. Das heißt es können mehrere Teilschritte beim Unterbrechen der Kreislaufströmung realisiert werden.

Bevorzugt sind die Überlauföffnungen radialsymmetrisch an der Drosselscheibe angeordnet. Dadurch wird gewährleistet, dass beim Einbringen der Drosselscheibe in den Arbeitsraum im Wesentlichen nur zur Rotationsachse symmetrische Kräfte auftreten, so dass Belastungen durch eine auftretende Unwucht vermieden werden.

Wenn die von der Drosselscheibe ausgebildeten Ränder der Überlauföffnungen stromlinienförmig abgerundet sind, wird das Auftreten von unerwünschten Wirbelströmungen des Arbeitsmediums an diesen Rändern weitestgehend vermieden.

Die Erfindung soll nachfolgend anhand von Ausführungsbeispielen und den beigefügten Figuren exemplarisch erläutert werden.

Es zeigen:
- Figur 1: eine Ausführungsform einer hydrodynamischen Kupplung mit einer kreisförmigen, als Innendrosselscheibe ausgebildeten erfindungsgemäßen Drosselscheibe;
- Figur 2: mögliche Ausformungen der von der Drosselscheibe ausgebildeten Ränder der Überlauföffnungen;
- Figur 3: mögliche Ausführungsformen der Gestaltung und Anordnung der Überlauföffnungen in einer kreisförmigen, als Innendrosselscheibe ausgebildeten erfindungsgemäßen Drosselscheibe;

Die Figuren der Zeichnungen zeigen den erfindungsgemäßen Gegenstand stark schematisiert und sind nicht maßstäblich zu verstehen. Die einzelnen Bestandteile des erfindungsgemäßen Gegenstandes sind so dargestellt, dass ihr Aufbau gut gezeigt werden kann.

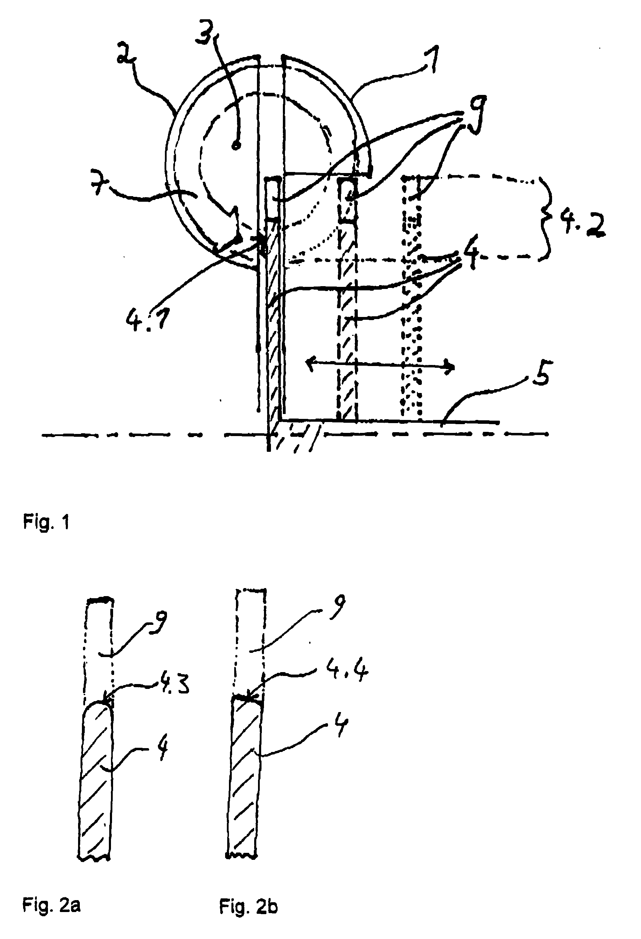

In der Figur 1 ist ein schematischer Axialschnitt durch eine erfindungsgemäße hydrodynamische Kupplung dargestellt. Dabei ist nur eine Seite oberhalb der Drehachse der Kupplung dargestellt. Man erkennt das Pumpenrad 1 und das Turbinenrad 2, welche miteinander einen torusförmigen Arbeitsraum 3 ausbilden. Im Pumpenrad 1 ist vom radial inneren Durchmesser bis zum Bereich des mittleren Durchmessers des Arbeitsraums 3 eine kreisförmige, als Innendrosselscheibe ausgebildete Drosselscheibe 4 angeordnet, die an einen Verstellmechanismus 5 angeschlossen ist. Die Kreislaufströmung von Arbeitsmedium im Arbeitsraum 3 (siehe den Pfeil 7) trifft axial vom Turbinenrad 2 in Richtung Pumpenrad 1 auf die Drosselscheibe 4, und zwar auf die Anströmseite 4.1 des als Strömungsunterbrechung wirkenden Anströmbereichs 4.2 der Drosselscheibe 4, auf. Die Drosselscheibe 4 erstreckt sich scheibenförmig oder als ein den Anströmbereich 4.2 umfassender Kreisring um die Drehachse 6 der hydrodynamischen Kupplung. Die Axialrichtung der Kupplung steht also im Wesentlichen senkrecht auf der Oberfläche der Anströmseite 4.1 des Anströmbereichs 4.2.

Der gezeigte Axialschnitt verläuft durch eine überlauföffnung 9 der Drosselscheibe 4, die als eine radial in Richtung des Mittelpunktes der Drosselscheibe 4 verlaufende Einbuchtung des radial äußeren Randes der Drosselscheibe 4 ausgebildet ist. Die Tiefe der Überlauföffnung 9, das heißt deren radialer Durchmesser, ist über die eingezeichnete innere radiale Randbegrenzung der Überlauföffnung 9 erkennbar. Die Überlauföffnung 9 ragt vom radial äußeren Rand der Drosselscheibe 4 aus lediglich teilweise in den Anströmbereich 4.2 hinein.

In ausgezogenen Linien ist die aktive Position der Drosselscheibe 4 mit dem Verstellmechanismus 5 dargestellt. In gepunkteten Linien ist die inaktive Position dargestellt. Eine Zwischenposition ist in gestrichelten Linien dargestellt. Die Drosselscheibe 4 ist mittels des Verstellmechanismus 5 von einem Bereich axial außerhalb des Arbeitsraums 3 (inaktive Position) mehr oder minder, zum Beispiel in die Zwischenposition, in den Arbeitsraum 3 einschiebbar, bis sie die in ausgezogenen Linien dargestellte maximale Drosselposition erreicht (aktive Position). Die maximale Position kann beispielsweise im Bereich des Trennspaltes zwischen dem Pumpenrad 1 und dem Turbinenrad 2 vorgesehen sein oder in einem Bereich innerhalb des Pumpenrads 1 oder des Turbinenrads 2 angrenzend an den Trennspalt.

Bei einer im Axialschnitt durch die hydrodynamische Kupplung parallel zur Drehachse der hydrodynamischen Kupplung verlaufenden Drosselscheibe kann die inaktive Position auch im Bereich des Trennspalts beziehungsweise im Zentrum des Arbeitsraums oder im Zentrum der Kreislaufströmung vorgesehen sein und die aktive Position innerhalb des Pumpenrads oder des Turbinenrads, so dass die Drosselscheibe in die Kreislaufströmung eingebracht ist.

Auch bei der in der Figur 1 gezeigten Drosselscheibe, die in einem Axialschnitt durch die hydrodynamische Kupplung senkrecht zur Drehachse der hydrodynamischen Kupplung verläuft, kann die Drosselscheibe alternativ in das Turbinenrad 2 anstelle des Pumpenrads 1 eingebracht werden.

Das Einschieben ist durch den in Figur 1 eingezeichneten Doppelpfeil symbolisiert. Man erkennt, dass in der Zwischenposition zwar bereits der äußere Rand der Drosselscheibe 4 in die Kreislaufströmung des Arbeitsmediums eingreift, jedoch die innere radiale Randbegrenzung der Überlauföffnung 9 noch nicht in die Kreislaufströmung eingreift. Es werden daher die Teile der Kreislaufströmung, die auf die Überlauföffnung 9 treffen, nicht unterbrochen, wohingegen diejenigen Teile der Kreislaufströmung, die außerhalb der Überlauföffnung 9 auf die Oberfläche der Anströmseite 4.1 des Anströmbereichs 4.2 treffen, bereits unterbrochen werden. In der maximalen Drosselposition ist die Drosselscheibe 4 dagegen so weit in die Kreislaufströmung eingeschoben, dass auch dort, wo die Überlauföffnung 9 angeordnet ist, die Kreislaufströmung unterbrochen wird. Der Außenbereich, beispielsweise Anströmbereich 4.2 der Drosselscheibe 4, ohne den äußeren Randbereich, also der Anströmbereich 4.2, in den keine Überlauföffnung 9 hinein reicht, reicht also aus, um die Kreislaufströmung vollständig zu unterbrechen. In der Position der maximalen Drosselung reicht die Drosselscheibe 4 in Radialrichtung bis in einen Bereich eines mittleren Durchmessers des Arbeitsraumes hinein. Da die Drosselscheibe 4 axial vollständig aus dem Arbeitsraum 3 bewegt wird, um die inaktive Position zu erreichen, ist ein entsprechender Bauraum axial außerhalb des Arbeitsraums 3 beziehungsweise des Pumpenrads 1 in der hydrodynamischen Kupplung vorzusehen.

In Figur 2 sind Beispiele möglicher stromlinienförmiger Ausformungen der von der Drosselscheibe 4 aus Figur 1 ausgebildeten Ränder 4.3,4.4 der Überlauföffnungen 9 gezeigt. Die Figuren stellen vergrößerte Ausschnitte des den Anströmbereich ausbildenden kreisringförmigen Außenbereichs der erfindungsgemäßen Drosselscheibe 4, wie in Figur 1 dargestellt, dar. Der in Figur 2a dargestellte Rand 4.3 ist halbkreisförmig ausgebildet. In Figur 2b weist der Rand 4.4 eine typische, in Strömungsrichtung abgeflachte Stromlinienform auf.

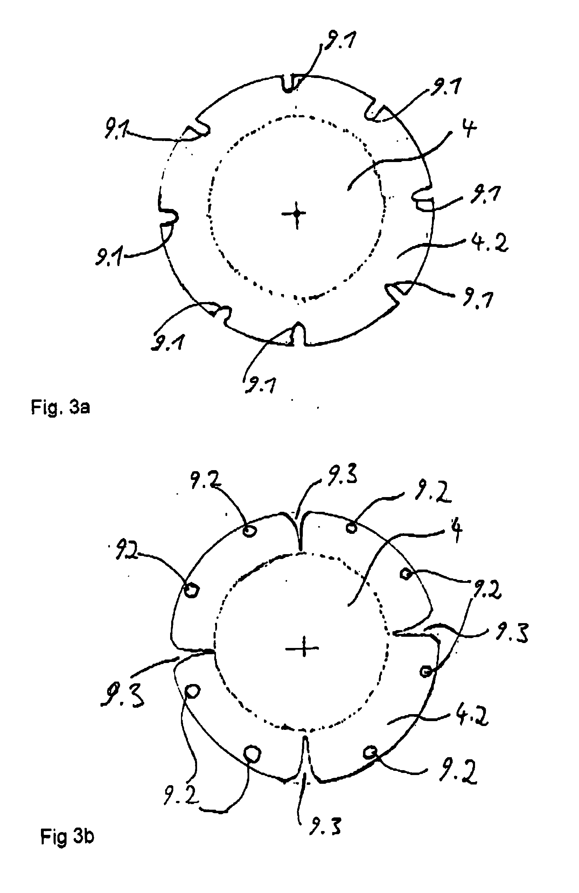

Figur 3 zeigt Beispiele möglicher Ausführungsformen der Gestaltung und Anordnung der Überlauföffnungen 9 einer Drosselscheibe 4 einer erfindungsgemäßen hydrodynamischen Kupplung. Der Anströmbereich 4.2 wird von der in den Figuren eingezeichneten gestrichelten Linie begrenzt, wird also, in den Beispielen der Figur 3, von einem äußeren Kreisring der Drosselscheibe 4, der sich in etwa über ein Drittel des Radius der Drosselscheibe 4 erstreckt, ausgebildet. Die Überlauföffnungen 9 sind jeweils radialsymmetrisch an der Drosselscheibe 4 angeordnet. In Figur 3a sind die Überlauföffnungen 9 durch U-förmige, radial in Richtung des Mittelpunktes der Drosselscheibe 4 verlaufende Einbuchtungen 9.1 des radial äußeren Randes der Drosselscheibe 4 ausgebildet. In Figur 3b sind die Überlauföffnungen 9 unterschiedlich ausgeformt. Zwischen jeweils zwei als Bohrungen 9.2 im äußeren Randbereich der Drosselscheibe 4 ausgebildete Überlauföffnungen 9 ist jeweils eine V-förmige Überlauföffnung 9.3 angeordnet. Das "V" ist jedoch derart ausgeführt, dass die Breite der Überlauföffnung in Umfangsrichtung der Drosselscheibe von radial außen nach innen derart abnimmt, dass diese Breite in einem radial inneren Bereich der Drosselscheibe nur noch einen Spalt bildet, der so schmal ist, dass die Kreislaufströmung des Arbeitsmediums auch bei Vorhandensein des Spaltes unterbrochen wird. Mittels einer derartigen V-förmigen Ausgestaltung der Überlauföffnungen kann die Stellung der Drosselscheibe, bei der die Kreislaufströmung im Bereich der Überlauföffnung unterbrochen wird, von der Strömungsgeschwindigkeit und anderen Parametern der Strömung variabel gestaltet sein.

Wenn die Drosselscheibe mit derselben Drehzahl mit dem Pumpenrad 1 oder dem Turbinenrad 2 umläuft, sind die Überlauföffnungen 9 vorteilhaft im Bereich der Mitte, in Umfangsrichtung der hydrodynamischen Kupplung gesehen, in den einzelnen Strömungskanälen zwischen den Schaufeln des entsprechenden Schaufelrades (Pumpenrad 1 oder Turbinenrad 2) angeordnet. Das bedeutet, die Überlauföffnungen 9 sind zwischen den einzelnen Schaufeln des Schaufelrads angeordnet, und somit außerhalb des Bereichs, in welchem die Schaufelstirnseiten der Drosselscheibe gegenüber stehen oder mit welchem die Drosselscheibe die Schaufeln möglicherweise mittels eines Schlitzes beidseitig umschließt. Selbstverständlich ist es auch möglich, auch im Bereich der Schaufeln entsprechende Überlauföffnungen vorzusehen, die dann jedoch nicht durch die Schaufeln verdeckt werden sollten, um ein Strömen eines Teils des Arbeitsmediums der Kreislaufströmung durch die Überlauföffnungen hindurch zu ermöglichen, damit dieser Teil einer "Drosselung" beziehungsweise Umlenkung umgeht.

Gemäß einer alternativen Ausführung läuft die Drosselscheibe nicht mit einem oder beiden Schaufelrädern um. Sie ist entweder ortsfest angeordnet oder kann mit einer anderen Geschwindigkeit als die beiden Schaufelräder umlaufen, beispielsweise im Arbeitsraum "taumeln", in der Regel mit einer Geschwindigkeit, die zwischen den voneinander abweichenden Geschwindigkeiten von Pumpenrad und Turbinenrad liegt.

Die Erfindung beschränkt sich nicht auf die vorstehend angegebenen Ausführungsbeispiele, Vielmehr ist eine Anzahl von Varianten denkbar, welche auch bei grundsätzlich anders gearteter Ausführung von den Merkmalen der Erfindung Gebrauch machen.

## Patentansprüche

1. Hydrodynamische Kupplung
1.1 mit einem Pumpenrad (1) und einem Turbinenrad (2), die miteinander einen torusförmigen, mit einem Arbeitsmedium befüllten oder befüllbaren Arbeitsraum (3) ausbilden, in dem eine Kreislaufströmung des Arbeitsmediums ausbildbar ist;
1.2 wobei eine Drosselscheibe (4) vorgesehen ist, die mittels eines Verstellmechanismus (5) in Axialrichtung der hydrodynamischen Kupplung verschiebbar ist, um in den Arbeitsraum (3) zwischen das Pumpenrad (1) und das Turbinenrad (2) eingebracht und/oder innerhalb dessen verschoben zu werden; **dadurch gekennzeichnet, dass**
1.2 die Drosselscheibe (4) in einem Randbereich ihres als Anströmbereich (4.2) der Kreislaufströmung vorgesehenen Oberflächenbereichs, mindestens eine Überlauföffnung (9) für einen Teil der Kreislaufströmung aufweist.

2. Hydrodynamische Kupplung gemäß Anspruch 1, **dadurch gekennzeichnet, dass**
die Überlauföffnungen (9) als radial in die Drosselscheibe (4) eingreifende Einbuchtungen (9.1,9.3) eines Randes der Drosselscheibe (4) und/oder als Bohrungen (9.2) im Randbereich der Drosselscheibe (4) ausgebildet sind.

3. Hydrodynamische Kupplung gemäß einem der Ansprüche 1 oder 2,
**dadurch gekennzeichnet, dass**
die Überlauföffnungen (9) zumindest in radialer Richtung der Drosselscheibe (4) zumindest teilweise unterschiedliche Durchmesser aufweisen.

4. Hydrodynamische Kupplung gemäß einem der Ansprüche 1 bis 3, **dadurch gekennzeichnet, dass**
die Überlauföffnungen (9) radialsymmetrisch an der Drosselscheibe (4) angeordnet sind.

5. Hydrodynamische Kupplung gemäß einem der Ansprüche 1 bis 4, **dadurch gekennzeichnet, dass**
die von der Drosselscheibe (4) ausgebildeten Ränder (4.3,4.4) der Überlauföffnungen (9) stromlinienförmig abgerundet sind.

6. Hydrodynamische Kupplung gemäß einem der Ansprüche 1 bis 5, **dadurch gekennzeichnet, dass**
die Drosselscheibe (4) derart in den Arbeitsraum (3) eingebracht und/oder innerhalb von diesem verschoben werden kann, dass das Arbeitsmedium bei in die Kreislaufströmung eingebrachter Drosselscheibe (4) unmittelbar aus einem Bereich des Arbeitsraums (3) in Strömungsrichtung vor der Drosselscheibe (4) durch die Überlauföffnung (9) hindurch in einen Bereich im Arbeitsraum (3) unmittelbar hinter der Drosselscheibe (4) ströme.

7. Hydrodynamische Kupplung gemäß einem der Ansprüche 1 bis 6, **dadurch gekennzeichnet, dass**
die Drosselscheibe (4) derart in den Arbeitsraum (3) eingebracht und/oder innerhalb dessen verschoben werden kann, dass sie in einer ersten Position von der Kreislaufströmung des Arbeitsmediums angeströmt wird, wobei ein Teil der Kreislaufströmung durch die wenigstens eine Überlauföffnung (9) strömt, und in einer zweiten Position von der Kreislaufströmung angeströmt wird, wobei die mindestens eine Überlauföffnung (9) und insbesondere alle Überlauföffnungen (9) außerhalb der Kreislaufströmung, insbesondere radial außerhalb der Kreislaufströmung oder radial innerhalb der Kreislaufströmung angeordnet sind,

8. Hydrodynamische Kupplung gemäß einem der Ansprüche 1 bis 7, **dadurch gekennzeichnet dass**
die wenigstens eine Überlauföffnung (9) oder alle Überlauföffnungen (9) während des Einbringens der Drosselscheibe (4) in den Arbeitsraum und/oder die Kreislaufströmung vollständig offen und insbesondere stets vollständig offen sind.

## Claims

1. A hydrodynamic coupling, comprising
1.1 a pump wheel (1) and a turbine wheel (2) which jointly form a toroidal working chamber (3) which is filled or can be filled with a working medium and in which a cycle flow of the working medium can be formed;
1.2 with a throttle disk (4) being provided which is displaceable in the axial direction of the hydrodynamic coupling by means of an adjusting mechanism (5) in order to be introduced into the working chamber (3) between the pump wheel (1) and the turbine wheel (2) and/or in order to be displaced within the same;
**characterized in that**
1.3 the throttle disk (4) comprises at least one overflow opening (9) for a part of the cycle flow in a boundary region of its surface area provided for as an inflow zone (4.2) of the cycle flow.

2. A hydrodynamic coupling according to claim 1, **characterized in that** the overflow openings (9) are arranged as depressions (9.1, 9.3) of an edge of the throttle disk (4) which engage radially into the throttle disk (4) and/or as bores (9.2) in the boundary region of the throttle disk (4).

3. A hydrodynamic coupling according to one of the claims 1 or 2, **characterized in that** the overflow openings (9) have at least partially different diameters at least in the radial direction of the throttle disk (4).

4. A hydrodynamic coupling according to one of the claims 1 to 3, **characterized in that** the overflow openings (9) are arranged in a radially symmetrical manner on the throttle disk (4).

5. A hydrodynamic coupling according to one of the claims 1 to 4, **characterized in that** the edges (4.3, 4.4) of the overflow openings (9) formed by the throttle disk (4) are rounded off in a streamlined manner.

6. A hydrodynamic coupling according to one of the claims 1 to 5, **characterized in that** the throttle disk (4) can be introduced into the working chamber (3) and/or displaced within the same in such a way that the working medium, when the throttle disk (4) is introduced into the cycle flow, will flow directly from a region of the working chamber (3) in the direction of flow before the throttle disk (4) through the overflow opening (9) into a region in the working chamber (3) directly behind the throttle disk (4).

7. A hydrodynamic coupling according to one of the claims 1 to 6, **characterized in that** the throttle disk (4) is introduced into the working chamber (3) and/or displaced within the same in such a way that the cycle flow of the working medium flows against the disk in a first position, with a part of the cycle flow flowing through the at least one overflow opening (9), and the cycle flow flows against the same in a second position, with the at least one overflow opening (9) and especially all overflow openings (9) being arranged outside of the cycle flow, especially radially outside of the cycle flow or radially within the cycle flow.

8. A hydrodynamic coupling according to one of the claims 1 to 7, **characterized in that** the at least one overflow opening (9) or all overflow openings (9) are completely open during the introduction of the throttle disk (4) into the working chamber and/or the cycle flow, and especially are always completely open.

## Revendications

1. Accouplement hydrodynamique
1.1 avec une roue de pompe (1) et une roue de turbine (2) qui forment ensemble un espace de travail (3) toroïdal rempli ou pouvant être rempli avec un fluide de travail, dans lequel un écoulement en boucle du fluide de travail peut être formé ;
1.2 dans lequel est prévue une plaque d'étranglement (4) qui peut être déplacée au moyen d'un mécanisme de déplacement (5) dans le sens axial de l'accouplement hydrodynamique pour être introduite dans l'espace de travail (3) entre la roue de pompe (1) et la roue de turbine (2) et/ou déplacée à l'intérieur de celui-ci ;
**caractérisé en ce que** :
1.2 la plaque d'étranglement (4) présente dans une zone de bord de sa partie de surface prévue comme partie exposée au flux (4.2) de l'écoulement en boucle au moins une ouverture de trop-plein (9) pour une partie de l'écoulement en boucle.

2. Accouplement hydrodynamique selon la revendication 1, **caractérisé en ce que** les ouvertures de trop-plein (9) sont conformées comme des découpes (9.1, 9.3) dans un bord de la plaque d'étranglement (4) empiétant dans le sens radial sur la plaque d'étranglement (4) et/ou comme des trous (9.2) percés dans la zone de bord de la plaque d'étranglement (4).

3. Accouplement hydrodynamique selon l'une des revendications 1 ou 2, **caractérisé en ce que** les ouvertures de trop-plein (9) présentent des diamètres au moins partiellement différents dans le sens radial de la plaque d'étranglement (4).

4. Accouplement hydrodynamique selon l'une des revendications 1 à 3, **caractérisé en ce que** les ouvertures de trop-plein (9) sont disposées selon une symétrie radiale sur la plaque d'étranglement (4).

5. Accouplement hydrodynamique selon l'une des revendications 1 à 4, **caractérisé en ce que** les bords (4.3, 4.4) des ouvertures de trop-plein (9) formés par la plaque d'étranglement (4) sont arrondis selon une forme hydrodynamique.

6. Accouplement hydrodynamique selon l'une des revendications 1 à 5, **caractérisé en ce que** la plaque d'étranglement (4) est introduite dans l'espace ce travail (3) et/ou déplacée à l'intérieur de celui-ci de telle façon que le fluide de travail s'écoule, quand la plaque d'étranglement (4) est introduite dans l'écoulement en boucle, directement d'une zone de l'espace de travail (3) en amont de la plaque d'étranglement (4) dans le sens d'écoulement à travers l'ouverture de trop-plein (9) vers une zone de l'espace de travail (3) située immédiatement en aval de la plaque d'étranglement (4).

7. Accouplement hydrodynamique selon l'une des revendications 1 à 6, **caractérisé en ce que** la plaque d'étranglement (4) est disposée dans l'espace de travail (3) et/ou déplacée à l'intérieur de celui-ci de façon à être exposée au flux de l'écoulement en boucle du fluide de travail dans une première position dans laquelle une partie de l'écoulement en boucle s'écoule à travers l'au moins une ouverture de trop-plein (9), et à être exposée au flux de l'écoulement en boucle dans une deuxième position dans laquelle l'au moins une ouverture de trop-plein (9) et en particulier toutes les ouvertures de trop-plein (9) sont disposées en dehors de l'écoulement en boucle, en particulier en dehors de l'écoulement en boucle dans le sens radial ou en dedans de l'écoulement en boucle dans le sens radial.

8. Accouplement hydrodynamique selon l'une des revendications 1 à 7, **caractérisé en ce que** l'au moins une ouverture de trop-plein (9) ou toutes les ouvertures de trop-plein (9) sont complètement ouvertes et en particulier toujours complètement ouvertes pendant l'insertion de la plaque d'étranglement (4) dans l'espace de travail et/ou l'écoulement en boucle.
